# EUROPÄISCHE PATENTSCHRIFT

(11) **EP 0 836 018 B1**
(45) Veröffentlichungstag und Bekanntmachung des Hinweises auf die Patenterteilung: **12.03.2003**
(21) Anmeldenummer: 97115854.8
(22) Anmeldetag: 12.09.1997
(51) Int. Cl.: F16C 11/06

(54) **Kugelgelenke sowie Vorrichtung zur Montage eines Kugelgelenkes**
Ball joint and method of mounting
Joint à rotule et procédé de montage

(30) Priorität: 19.09.1996 DE 19638466
(43) Veröffentlichungstag der Anmeldung: 15.04.1998
(73) Patentinhaber: TRW Fahrwerksysteme GmbH & Co. KG, 40547 Düsseldorf (DE)
(72) Erfinder: Lieber, Hanno, D-45219 Essen-Kettwig (DE); Schmermbeck, Sabine, D-40476 Düsseldorf (DE); Welchert, Erhart, D-41363 Jüchen-Gierath (DE); Kozlowski, Horst, D-41179 Mönchengladbach (DE)
(74) Vertreter: Stenger, Watzke & Ring Patentanwälte

(56) Entgegenhaltungen:
- DE-A- 19 513 826
- FR-A- 1 171 068
- FR-A- 2 075 134
- FR-A- 2 503 291
- GB-A- 917 866

## Beschreibung

Die Erfindung betrifft ein Kugelgelenk, insbesondere als führendes Gelenk für Kraftfahrzeuge, mit einem eine kugelringförmige Lagerfläche aufweisenden Gelenkgehäuse, in dem eine an einem Kugelzapfen angeordnete Kugel begrenzt verdrehbar und kippbar gelagert ist und das durch einen Deckel verschlossen ist, der im Ausgangszustand mit einem den Innendurchmesser einer glattwandigen zylindrischen Bohrung des Gelenkgehäuses übersteigenden Außendurchmesser ausgebildet ist und der sich im Einbauzustand mit seinem Rand kraftschlüssig im Gelenkgehäuse abstützt. Weiterhin betrifft die Erfindung eine Vorrichtung zur Montage eines solchen Kugelgelenkes.

Ein derartiges Kugelgelenk ist aus der DE-Patentschrift 195 13 826 bekannt. Durch die Verwendung des sich kraftschlüssig im Gelenkgehäuse abstützenden Deckels ist es bei diesem bekannten Kugelgelenk möglich, unter Vermeidung einer festen Anlagefläche für den Deckel Fertigungstoleranzen vollständig auszugleichen. Hierzu ist zwischen der Lagerkugel und dem Deckel ein Federelement angeordnet, das im Ausgangszustand definierte Federkräfte zur Verfügung stellt, um die verschleißbedingte Elastizität des Gelenks auszugleichen. Dieses Gelenk hat sich in dynamischen Versuchen zwar durchaus bewährt, jedoch wurde auf Grund von Berechnungen festgestellt, daß einerseits die Lebensdauer der Federelemente geringer ist als die Lebensdauer des Kugelgelenks und andererseits die ständige Belastung der Kugel in Richtung der Kugelzapfenlängsachse durch das Federelement unvermeidbar zu einem erhöhten Verschleiß der Lagerfläche in axialer Richtung führt. Hinzu kommt noch, daß auf Grund der ständigen Druckbelastung der Kugel in Richtung der Lagerfläche ungünstige Schmierbedingungen des üblicherweise mit einer Dauerschmierung versehenen Kugelgelenkes auftreten können.

Ein weiteres Kugelgelenk mit einem sich kraftschlüssig im Gelenkgehäuse abstützenden Deckel ist aus der US-Patentschrift 4,163,617 bekannt. Bei diesem bekannten Kugelgelenk wird die Lagerfläche von einer mit axialen Schlitzen versehenen Schnappkapsel-Lagerschale gebildet, die die an dem Kugelzapfen angeordnete Kugel vollständig umschließt. Diese Schnappkapsel-Lagerschalen, welche ausschließlich aus Kunststoff herstellbar sind, weisen die Nachteile auf, daß einerseits materialbedingt eine großvolumige Bauart erforderlich ist und andererseits normale Kunststoffe nicht dafür geeignet sind, die insbesondere im Nutzfahrzeugbereich auftretenden hohen Belastungsspitzen ohne bleibende Beschädigungen der Lagerschale aufzunehmen.

Ausgehend von diesem Stand der Technik liegt der Erfindung die Aufgabe zugrunde, ein Kugelgelenk zu schaffen, das preiswert automatisiert herstellbar und bei geringem Verschleiß über lange Zeit funktionssicher ist. Weiterhin liegt der Erfindung die Aufgabe zugrunde, eine einfache Vorrichtung zur Montage eines solchen Kugelgelenkes zu schaffen.

Die Lösung dieser Aufgabe durch die Erfindung ist durch die Merkmale der kennzeichnenden Teils der Anspruchs 1 gekennzeichnet.

Durch die Ausbildung einer kugelringförmigen Lagerfläche am Deckel, der nicht durch Formschluß, das heißt unter Inkaufnahme von Fertigungstoleranzen, sondern kraftschlüssig, das heißt spielfrei montiert wird, kann eine Feder zwischen Deckel und einer separaten oberen Lagerschale entfallen. Da bei der erfindungsgemäßen Ausbildung des Kugelgelenkes keine in Achsrichtung wirkende Feder verwendet wird, ergibt sich nicht nur eine Verbilligung durch den Wegfall eines teuren Elements, sondern es entfällt auch der durch die zum Spielausgleich benötigte Feder hervorgerufene Verschleiß in axialer Richtung. Beim erfindungsgemäßen Gelenk, das insbesondere als führendes Gelenk eingesetzt und demzufolge überwiegend in radialer Richtung belastet wird, ergibt sich ein sichelförmiger Verschleiß an den kreisringförmigen Lagerflächen nur in der radial zur Kugelzapfenlängsachse verlaufenden Richtung, d. h. auch bei auftretendem Verschleiß entsteht kein relevantes Spiel in axialer Richtung.

Die kugelringförmige Lagerfläche des Deckels liegt entweder unmittelbar oder mittelbar an der Kugeloberfläche an, d. h. ohne zwischengeschaltete Feder aus elastisch federndem oder elastisch verformbarem Material. Durch diese Einsparung eines Bauteils wird die Montage des erfindungsgemäßen Kugelgelenkes vereinfacht und somit preiswerter. Die geforderte Funktionssicherheit ergibt sich bei dem solchermaßen ausgestalteten Kugelgelenk dadurch, daß die bei der Herstellung unvermeidlichen Toleranzen durch den sich kraftschlüssig im Gelenkgehäuse abstützenden Deckel bei der Montage auf einfache Weise ausgeglichen werden.

Gemäß der Erfindung wird vorgeschlagen, daß zumindest im Bereich der kugelringförmigen Lagerfläche des Deckels ein verschleißverhinderndes Zwischenelement angeordnet ist. Bei dieser Ausführungsform, bei der nach der Montage keinerlei Spiel zwischen Deckel und Zwischenelement besteht, erfolgt der Verschleißschutz der kugelringförmigen Lagerfläche des Deckels über ein separates verschleißverhinderndes Zwischenelement, so daß die kugelringförmige Lagerfläche des Deckels nur mittelbar an der Kugeloberfläche anliegt.

Eine Zentrierung der Kugel in radialer Richtung bei aufgetretenem radialen Verschleiß kann gemäß der Erfindung dadurch bewirkt werden, daß am äußeren Rand eines zwischen Deckel und Kugeloberfläche angeordneten Zwischenelements Zentrieransätze ausgebildet sind, die sich am Deckel und/oder Gelenkgehäuse abstützen. Durch die spielfreie Anordnung dieser Zwischenelemente auf der Gehäuseinnenseite des Deckels können die Zwischenelemente keine Federwirkung in axialer Richtung ausüben, wie dies aus dem Stand der Technik bekannt ist.

Gemäß einer ersten bevorzugten Ausführungsform der Erfindung ist die Lagerfläche zur Lagerung der an dem Kugelzapfen angeordneten Kugel einstückig als Teil des Gelenkgehäuses ausgebildet. Bei dieser Ausführungsform, bei der das Gehäuse im Bereich der kugelringförmigen Lagerfläche gehärtet ist, besteht die gesamte, das Kugelgelenk bildende Baugruppe aus nur drei Bauteilen, nämlich dem Gelenkgehäuse, dem Kugelzapfen mit angeordneter Kugel sowie dem Deckel zum Verschließen des Gelenkgehäuses. Auf Grund der Beschränkung der Bauteilzahl auf das Minimum, ist ein solchermaßen aufgebautes Kugelgelenk äußerst einfach und preiswert zu fertigen.

Bei einer zweiten bevorzugten Ausführungsform eines erfindungsgemäßen Kugelgelenkes ist die Lagerfläche an einer als separates Teil im Gehäuse angeordneten Lagerschale ausgebildet. Diese Ausführungsform ermöglicht auf einfache Weise eine Anpassung der Lagerfläche des Kugelgelenkes an verschiedene Einsatzbedingungen. Durch geeignete Wahl des Materials der Lagerschale, beispielsweise gehärtetes Metall, Kunststoff oder Keramik ist eine solche Anpassung des Kugelgelenkes auf einfache Weise möglich.

Um das Einsetzen des Deckels bei der Montage zu erleichtern, ist gemäß einer weiteren bevorzugten Ausführungsform der Erfindung das Gelenkgehäuse mit einer die zylindrische Bohrung umgebende Anfasung versehen.

Weitere Merkmale und Vorteile der Erfindung ergeben sich aus der nachfolgenden Beschreibung der zugehörigen Zeichnung, in der vier Ausführungsbeispiele eines Kugelgelenkes dargestellt ist. In der Zeichnung zeigt:
- Fig. 1: einen Längsschnitt durch eine erste Ausführungsform eines Kugelgelenkes;
- Fig. 2a: einen Längsschnitt durch eine zweite Ausführungsform eines Kugelgelenkes;
- Fig. 2b: einen Längsschnitt durch eine dritte Ausführungsform eines Kugelgelenkes;
- Fig. 3: einen Längsschnitt durch eine vierte Ausführungsform eines Kugelgelenkes mit eingezeichneten Kraftwirkungslinien;
- Fig. 4: einen Querschnitt entlang der Schnittlinie IV-IV in Fig. 3 und
- Fig. 5a bis 5d: einen schematischen Montageablauf zur Herstellung eines Kugelgelenkes gemäß Fig. 3.

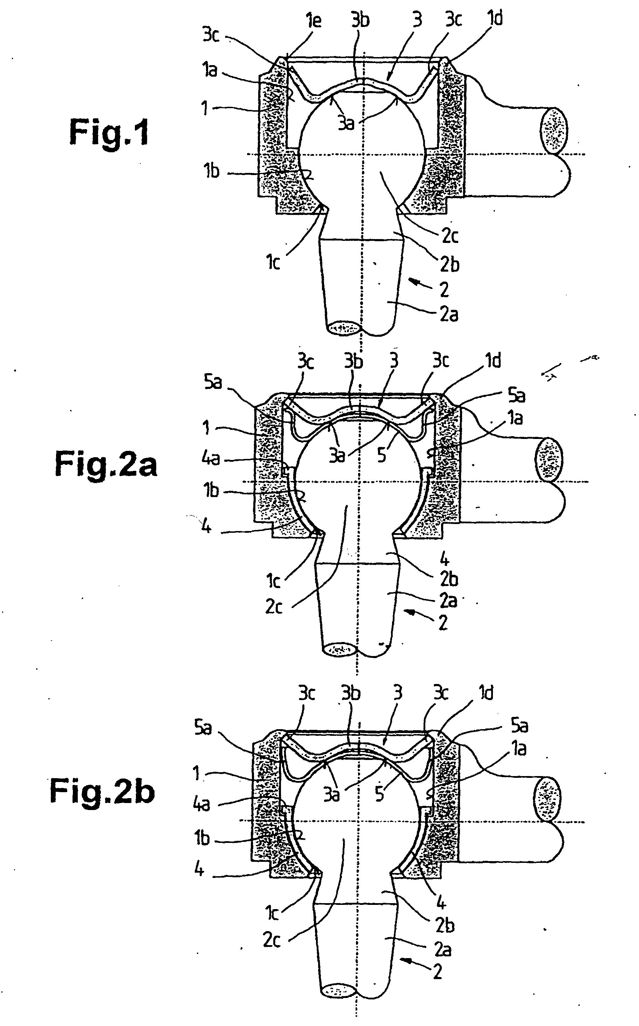

Das in Fig. 1 fertig montiert dargestellte Kugelgelenk umfaßt ein Gelenkgehäuse 1, das mit einer zylindrischen Bohrung 1a und einer kugelringförmigen Lagerfläche 1b versehen ist. An dem sich an die kugelringförmige Lagerfläche 1b anschließenden unteren Ende weist das Gelenkgehäuse 1 eine Durchtrittsöffnung 1 c für einen Kugelzapfen 2 auf.

Der Kugelzapfen 2 umfaßt beim Ausführungsbeispiel einen leicht konischen Zapfenteil 2a, der mittels eines gegenläufig konischen Übergangs 2b in eine. Lagerkugel 2c übergeht. Diese Lagerkugel 2c liegt unterhalb ihres größten Durchmessers an der kugelringförmigen Lagerfläche 1b des Gelenkgehäuses 1 an. Beim dargestellten Ausführungsbeispiel ist die Lagerfläche 1b einstückig als Teil des Gelenkgehäuses 1 ausgebildet. Bei einer solchen Ausführungsform ist die Lagerfläche 1b gehärtet, beispielsweise einsatzgehärtet.

Im montierten Zustand, wie dieser in den Abbildungen Fig. 1 bis 3 dargestellt ist, ist die zylindrische Bohrung 1a des Gelenkgehäuses 1 durch einen Deckel 3 verschlossen, der auf der der kugelringförmigen Lagerfläche 1b des Gelenkgehäuses 1 gegenüberliegenden Seite des Kugeläquators seinerseits eine kugelringförmige Lagerfläche 3a für die Kugel 2c bildend an der Kugel 2c anliegt. Wie aus den Abbildungen ersichtlich, ist der Deckel 3 im Querschnitt W-förmig so ausgebildet, daß er nur mit der kugelringförmigen Lagerfläche 3a an der Kugel 2c anliegt, während ein Mittenbereich 3b des Deckels 3 so nach oben gebogen ist, daß dieser Mittenbereich 3b im montierten Zustand des Deckels nicht an der Kugel 2c anliegt. Von den Lagerflächen 3a aus geht der Deckel 3 in einen schräg nach oben verlaufenden Randbereich 3c über.

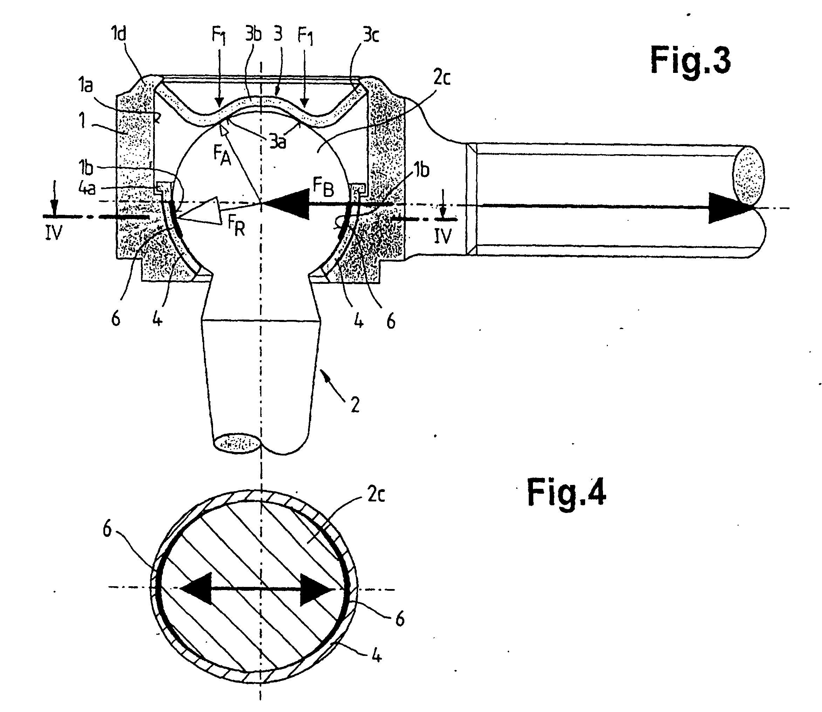

Durch diese Ausgestaltung des Deckels 3 wird erreicht, daß der Deckel 3 mit einer verhältnismäßig geringen Montagekraft F₁, die nicht zentral, sondern im Abstand vom Deckelmittelpunkt auf den Deckel 3 wirkt, in das Gelenkgehäuse 1 eingedrückt werden kann, wie dies den Kraftwirkungslinien in Fig. 3 zu entnehmen ist. Aufgrund der Ausgestaltung des Deckels 3 und insbesondere des schrägen Randbereiches 3c biegt sich bei der Montage der Randbereich 3c entgegen der Eindrückbewegung elastisch zurück, so daß sich auf einfache Weise eine Anpassung des im Ausgangszustand größeren Außendurchmessers des Deckels 3 an den kleineren Innendurchmesser, das heißt an die Bohrung 1a des Gelenkgehäuses 1 ergibt. Die Eindrückbewegung des Deckels 3 ist beendet, sobald ein Kontakt mit der Oberfläche der Kugel 2c erreicht und eine vorgegebene Eindrückkraft F₁ erreicht worden ist. Der solchermaßen in das Gelenkgehäuse 1 eingedrückte Deckel 3 liegt nunmehr spielfrei mit seiner kugelringförmigen Lagerfläche 3a an der Kugel 2c an. Auf diese Weise können sämtliche Herstellungstoleranzen bei Abschluß der Deckelmontage ausgeglichen werden. Die verformten Randbereiche 3c des Deckels 3 im montierten Zustand bewirken eine sichere Festlegung des Deckelrandes am Gelenkgehäuse 1, da die in diesem Randbereich vorhandenen Rückstellkräfte dazu tendieren, den Mittenbereich 3b des Deckels 3 aus der zylindrischen Bohrung 1a des Gelenkgehäuses 1 zurückzudrücken, die hierfür erforderliche Durchmesservergrößerung des Deckels 3 jedoch durch die Anlage seines Randbereiches 3c in der zylindrischen Bohrung 1a des Gelenkgehäuses 1 verhindert wird. Es ergibt sich auf diese Weise eine Klemmkraft, die den Deckel 3 trotz der ausschließlich kraftschlüssigen Festlegung sicher in der zylindrischen Bohrung 1a des Gelenkgehäuses 1 hält. Diese Ausführungsform zeigt somit eine Kraftschlüssige Abstätzung, wie sie in den Ansprüchen definiert ist, auch wenn das Kugelgelenk kein Zwischenelement aufweist und daher nicht unter den Schutzbereich der Ansprüche fällt.

Die in Fig. 1 dargestellte Ausführungsform stellt ein Kugelgelenk dar, das aus nur drei Bauteilen, nämlich dem Gelenkgehäuse 1, dem Kugelzapfen 2 mit angeordneter Kugel 2c sowie dem Deckel 3 besteht.

Bei der in Fig. 2a dargestellten zweiten Ausführungsform eines Kugelgelenkes ist im Gegensatz zur ersten Ausführungsform die kugelringförmige Lagerfläche 1b des Gelenkgehäuses 1 nicht einstückig als Teil des Gelenkgehäuses 1 ausgebildet, sondern an einer als separates Teil im Gelenkgehäuse 1 angeordneten Lagerschale 4 ausgebildet. Die Lagerschale 4 weist einen radial nach außen abstehenden Rand 4a auf und endet vor der Durchtrittsöffnung 1c im unteren Teil des Gelenkgehäuses 1. Die als separates Teil in das Gelenkgehäuse 1 einsetzbaren Lagerschalen 4 können aus jedem geeigneten Material, beispielsweise gehärtetem Stahl, Kunststoff oder Keramik bestehen.

Als weiteren Unterschied weist die in Fig. 2a dargestellte Ausführungsform ein zwischen Deckel 3 und Oberfläche der Kugel 2c angeordnetes verschleißverhinderndes Zwischenelement 5 auf. Dieses Zwischenelement 5 liegt nach der Montage spielfrei zwischen Deckel 3 und Kugel 2c. Neben der Wirkung als verschleißverhinderndes Element können die Zwischenelemente 5 eine Zentrierung der Kugel 2c in radialer Richtung bei aufgetretenem radialen Verschleiß dadurch bewirken, daß am äußeren Rand des Zwischenelementes 5 Zentrieransätze 5a angeformt sind. Bei dem in Fig. 2a dargestellten Ausführungsbeispiel stützen sich die Zentrieransätze 5a des Zwischenelementes 5 an der Unterseite des Deckels 3 ab.

Bei der in Fig. 2b dargestellten dritten Ausführungsform eines Kugelgelenkes stützen sich die Zentrieransätze 5a des Zwischenelementes 5 am Gelenkgehäuse 1, und zwar an der zylindrischen Bohrung 1a des Gelenkgehäuses 1 ab. Ansonsten entspricht die Ausgestaltung der Ausführungsform gemäß Fig. 2b der Ausführungsform gemäß Fig. 2a.

Aus den Abbildungen Fig. 2a und 2b ist weiterhin ersichtlich, daß ein oberer Rand 1 d des Gelenkgehäuses 1 nach Abschluß der Montage des Deckels 3 zur formschlüssigen Festlegung des Deckels 3 umgeformt werden kann. Diese Ausführungsform fältt dann jedoch nicht mehr unter den Schutzbereich der Ansprüche. Diese Umformung des Randes 1d bewirkt keine Veränderung der Lagepositionierung des Deckels in der zylindrischen Bohrung 1a.

In Fig. 3 sind bei einer vierten Ausführungsform eines Kugelgelenkes die verschiedenen Kraftwirkungslinien beispielhaft eingezeichnet, die bei der Montage und beim Betrieb eines Kugelgelenkes auftreten. Die vierte Ausführungsform entspricht im wesentlichen der in Fig. 1 dargestellten Ausführungsform, jedoch ist die Lagerfläche für die Kugel 2 an einer als separates Teil im Gelenkgehäuse 1 angeordneten Lagerschale 4 ausgebildet. Auch ist hier eine Formschlüssige Abstützung der Deckels am Gelenkgehäuse gezeigt, die ebenfalls nicht unter den Schutzbereich der Ansprüche fällt.

Wie aus der Darstellung ersichtlich, kann die Krafteinleitung im Fahrbetrieb F_{B} in eine Radialkraftkomponente F_{R} und eine Axialkraftkomponente F_{A} zerlegt werden. Da die dargestellten Kugelgelenke insbesondere als führende Gelenke eingesetzt und demzufolge überwiegend in radialer Richtung belastet werden, stellt die Radialkraftkomponente F_{R} die Hauptkraftkomponente dar. Demzufolge tritt auch in Radialrichtung der Hauptverschleiß solcher Kugelgelenke auf. Solche Hauptverschleißzonen 6 liegen knapp unterhalb des Äquators der Kugel 2c, wie dies in Fig. 3 dargestellt ist.

Wie aus Fig. 4 ersichtlich, die einen Querschnitt durch die Kugel 2c und die Lagerschale 4 gemäß Fig. 3 darstellt, führen die Radialkräfte F_{R} eines solchen überwiegend in radialer Richtung belasteten Kugelgelenks zu einem sichelförmigen Verschleiß an den kreisringförmigen Lagerflächen 1 b nur in der radial zur Kugelzapfenlängsachse verlaufenden Richtung, das heißt, daß auch bei auftretendem Verschleiß kein Spiel des Gelenks in axialer Richtung entsteht.

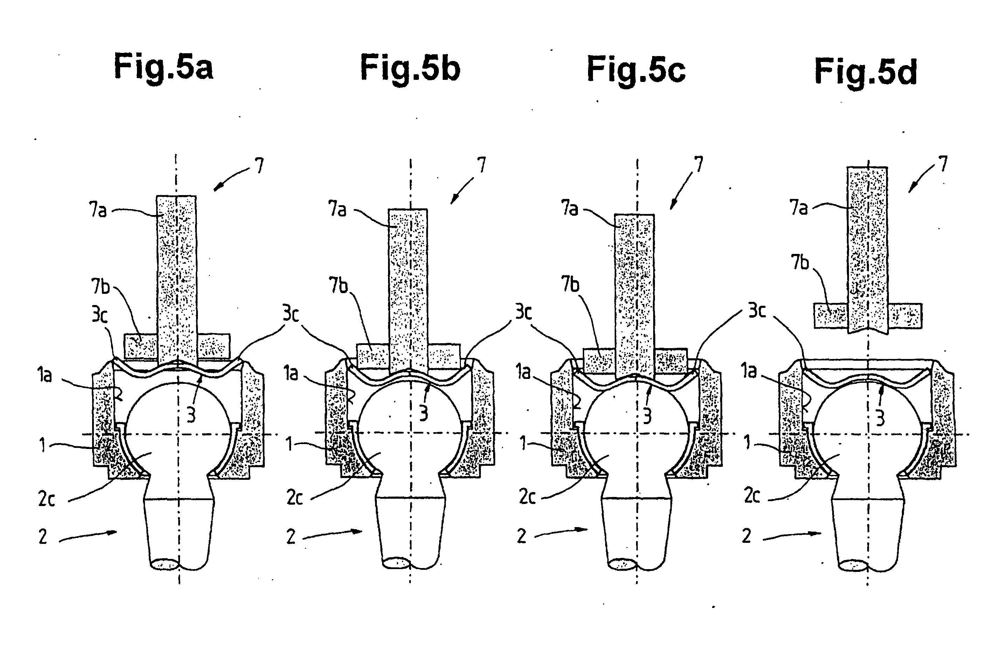

In Fig. 5a bis 5d ist beispielhaft die Montage eines Kugelgelenks und insbesondere die Deckelmontage dargestellt, auch wenn den Kugelgelenk kein Zwischenelement im Sinne der Ansprüche aufweist. Zur Montage des Deckels 3 wird ein aus einem Montagedorn 7a und einem Deckelführungsring 7b bestehendes Werkzeug 7 verwendet.

Bei dem in Fig. 5a dargestellten ersten Montageschritt wird zunächst der Deckel 3 auf den Rand 1d des Gelenkgehäuses 1 aufgesetzt und das Werkzeug 7 am Deckel 3 angesetzt. Um das Einführen des Deckels 3 in die zylindrische Bohrung 1a des Gelenkgehäuses 1 zu erleichtern, ist der Rand 1d mit einer die zylindrische Bohrung 1a umgebenden Anfasung 1e versehen. An seiner an dem Deckel 3 angreifenden Stirnfläche ist der Montagedorn 7a mit einer kreisringförmigen Druckfläche ausgebildet, die bewirkt, daß nicht zentral, sondern ringförmig im Abstand vom Deckelmittelpunkt auf den Deckel 3 gedrückt wird.

Bei der in den Abbildungen 5b und 5c dargestellten weiteren Montage wird der Deckel 3 über den Montagedorn 7a in die zylindrische Bohrung 1a des Gelenkgehäuses 1 eingedrückt, bis der Deckel 3 in Kontakt mit der Oberfläche der Kugel 2 tritt. Das Eindrücken des Deckels 3 über den Montagedorn 7a wird beim Erreichen einer vorgebbaren Eindrückkraft beendet. Der auf dem Montagedorn 7a angeordnete Deckelführungsring 7b verhindert ein Kippen des Deckels 3 bei der Montage. Da über den Deckelführungsring 7b keine Druckkräfte auf den Deckel 3 ausgeübt werden, hat der Deckelführungsring 7b normalerweise geringes Spiel zu den Randbereichen 3c des Deckels 3. Nach Beendigung der Deckelmontage wird das Werkzeug 7 wieder vom Deckel 3 fortgefahren, wie dies in Fig. 5d dargestellt ist. Beim Abziehen des Werkzeuges 7 biegt sich der Mittenbereich 3b des Deckels 3 wieder aufwärts, so daß der Deckel 3 nur mit seiner kugelringförmigen Lagerfläche 3a an der Kugel 2c anliegt. Durch das Fortlassen eines das Kugelgelenk in axialer Richtung vorspannende Federelements kann ein solchermaßen ausgestaltetes Kugelgelenk besonders einfach und preiswert auch in der automatisierten Serienfertigung funktionssicher hergestellt werden.

### Bezugszeichenliste

- 1: Gelenkgehäuse
- 1a: Bohrung
- 1b: Lagerfläche
- 1c: Durchtrittsöffnung
- 1d: Rand
- 1e: Anfasung
- 2: Kugelzapfen
- 2a: Zapfenteil
- 2b: Übergang
- 2c: Kugel
- 3: Deckel
- 3a: Lagerfläche
- 3b: Mittenbereich
- 3c: Randbereich
- 4: Lagerschale
- 4a: Rand
- 5: Zwischenelement
- 5a: Zentrieransatz
- 6: Hauptverschleißzone
- 7: Werkzeug
- 7a: Montagedorn
- 7b: Deckelführungsring

- F₁: Deckelmontagekraft
- F_{B}: Fahrbetriebskraft
- F_{R}: Radialkraft
- F_{A}: Axialkraft

## Patentansprüche

1. Kugelgelenk, insbesondere als führendes Gelenk für Kraftfahrzeuge, mit einem einen konkav ausgebildeten Kugelkalottenstumpf (1b) aufweisenden Gelenkgehäuse (1), in dem eine an einem Kugelzapfen (2) angeordnete Kugel (2c) begrenzt verdrehbar und kippbar gelagert ist und das durch einen Deckel (3) verschlossen ist, der im Ausgangszustand mit einem den Innendurchmesser einer glattwandigen zylindrischen Bohrung (1a) des Gelenkgehäuses (1) übersteigenden Außendurchmesser ausgebildet ist und der sich im Einbauzustand mit seinem Rand (3c) kraftschlüssig im Gelenkgehäuse abstützt,
**dadurch gekennzeichnet,**
**daß** der Deckel (3) auf der relativ zum Kugeläquator zum konkav ausgebildeten Kugelkalottenstumpf (1b) des Gelenkgehäuses (1) gegenüberliegenden Seite seinerseits mit einer kugelringförmigen Lagerfläche (3a) für die Kugel (2c) ausgebildet ist, wobei zumindest im Bereich der kugelringförmigen Lagerfläche (3a) des Deckels (3) ein verschleißverhindemdes Zwischenelement zwischen Deckel (3) und Kugel (2c) angeordnet ist, wobei am in radialer Richtung außeren Rand des Zwischenelements (5) Zentriereinsätze (5a) ausgebildet sind, die sich am Deckel (3) und/oder Gelenkgehäuse (1) abstützen.

2. Kugelgelenk nach Anspruch 1, **dadurch gekennzeichnet, daß** der konkav ausbildete Kugelkalottenstumpf (1b) einstückig als Teil des Gelenkgehäuses (1) ausgebildet ist.

3. Kugelgelenk nach einem der Ansprüche 1 oder 2, **dadurch gekennzeichnet, daß** der konkav ausgebildete Kugelkalottenstumpf (1b) an einer als separates Teil im Gelenkgehäuse (1) angeordneten Lagerschale (4) ausgebildet ist.

4. Kugelgelenk nach einem der vorhergehenden Ansprüche, **dadurch gekennzeichnet, daß** das Gelenkgehäuse (1) mit einer die zylindrische Bohrung (1a) umgebenden Anfasung (1e) versehen ist.

## Claims

1. Ball joint, in particular as a guiding joint for motor vehicles, comprising a joint housing (1), which has a concave truncated spherical cap (1b) and in which a ball (2c) disposed on a ball pin (2) is mounted so as to be, to a limited extent, rotatable and tiltable and which is closed by a cover (3), which in the initial state is designed with an outside diameter exceeding the inside diameter of a smooth-walled cylindrical bore (1a) of the joint housing (1) and which in the fitted state is supported by its edge (3c) non-positively in the joint housing,
**characterized in**
**that** the cover (3) at the, relative to the ball equator, opposite side to the concave truncated spherical cap (1b) of the joint housing (1) is in turn designed with a spherical ring-shaped bearing surface (3a) for the ball (2c), wherein at least in the region of the spherical ring-shaped bearing surface (3a) of the cover (3) an anti-wear intermediate element is disposed between cover (3) and ball (2c), wherein on the, in radial direction, outer edge of the intermediate element (5) centring projections (5a) are formed, which are supported against the cover (3) and/or joint housing (1).

2. Ball joint according to claim 1, **characterized in that** the concave truncated spherical cap (1b) is formed integrally as part of the joint housing (1).

3. Ball joint according to one of claims 1 or 2, **characterized in that** the concave truncated spherical cap (1b) is formed on a bearing shell (4) disposed as a separate part in the joint housing (1).

4. Ball joint according to one of the preceding claims, **characterized in that** the joint housing (1) is provided with a chamfer (1e), which surrounds the cylindrical bore (1a).

## Revendications

1. Joint à rotule, en particulier joint conducteur pour véhicules à moteur, avec un boîtier d'articulation présentant un segment sphérique (1b) concave, dans lequel est logée une sphère (2c) tournante et basculante dans certaines limites, agencée sur un pivot à rotule (2) et qui est fermé au moyen d'un couvercle (3) formé à l'état initial avec un diamètre extérieur dépassant le diamètre intérieur d'un orifice (1a) cylindrique lisse du boîtier d'articulation (1) et qui, à l'état monté est en appui par son bord (3c) par action de force dans le boîtier d'articulation,
**caractérisé en ce que**,
le couvercle (3) est formé sur le côté opposé relativement à l'équateur sphérique du segment sphérique de forme concave (1b) du boîtier d'articulation (1), de son coté avec une surface d'appui (3a) en forme de bague de roulement à billes pour la sphère (2c), où au moins dans la zone de la surface d'appui en forme de bague de roulement à billes (3a) du couvercle (3) un élément intermédiaire empêchant l'usure est disposé entre le couvercle (3) et la sphère (2c), où sur le bord extérieur dans le sens radial de l'élément intermédiaire (5) sont formées des saillies de centrage (5a), qui sont en appui sur le couvercle (3) et/ou le boîtier d'articulation.

2. Joint à rotule selon la revendication 1, **caractérisé en ce que** le segment sphérique (1b) de forme concave est constitué d'une seule pièce en tant que partie du boîtier d'articulation (1).

3. Joint à rotule selon l'une quelconque des revendications 1 ou 2, **caractérisé en ce que** le segment sphérique (1b) de forme concave est formé sur une coquille de support (4) agencée en tant que partie séparée dans le boîtier d'articulation (1).

4. Joint à rotule selon l'une des revendications précédentes, **caractérisé en ce que** le boîtier d'articulation (1) est doté d'un biseautage (1e) environnant l'orifice cylindrique (1a).
